# EUROPEAN PATENT APPLICATION

(11) **EP 2 761 997 A1**
(43) Date of publication of application: **06.08.2014**
(21) Application number: 12837315.6
(22) Date of filing: 16.08.2012
(51) Int. Cl.: A01G 7/00

(54) **ILLUMINATING DEVICE FOR PLANT CULTIVATION, PLANT CULTIVATION SYSTEM AND PLANT CULTIVATION METHOD**

(30) Priority: 30.09.2011 JP 2011218365
(71) Applicant: Sharp Kabushiki Kaisha, Osaka-shi, Osaka 545-8522 (JP)
(72) Inventor: KUBO, Tomoki, Osaka-shi, Osaka 545-8522 (JP); TOMITA, Chikako, Osaka-shi, Osaka 545-8522 (JP); SAKAMOTO, Masaru, Osaka-shi, Osaka 545-8522 (JP)
(74) Representative: Müller - Hoffmann & Partner
(86) International application number: PCT/JP2012/070858
(87) International publication number: WO 2013/046989

(57) **Abstract**

The present invention individually controls elongation growth of a plurality of plant individuals that are cultivated in an identical cultivation zone. In a plant cultivation system (1), illumination light emitted from an elongation promoting illuminating section (2) and illumination light emitted from a standard illuminating section (3) have different influences on elongation growth of a plant. The elongation promoting illuminating section (2) and the standard illuminating section (3) irradiate respective different regions in an identical cultivation zone with the illumination light.

## Description

### Technical Field

The present invention relates to an illuminating device for plant cultivation, a plant cultivation system including the illuminating device, and a plant cultivation method.

### Background Art

Due to a plant factory boom in recent years, the number of companies which enter the plant factory business is rapidly increasing. A plant factory, in which a light environment can be artificially controlled, makes it possible to stably cultivate a plant under no influence of changes in climate by cultivating it under suitable conditions.

It is known that in a cultivation method utilizing artificial light such as a light-emitting diode (LED) or fluorescent light, quantity and quality of the light greatly affect shapes, nutrients, yield, etc. of plants. In view of this, various companies and research institutions are studying light environments suitable for plants.

Patent Literature 1 discloses an illumination control method. According to this illumination control method, light which is larger in photon flux having a wavelength from 700 nm to 800 nm than a photon flux having a wavelength from 600 nm to 700 is emitted during a vegetative growth stage from fix planting to inflorescence formation of a long-day plant. Meanwhile, light which is larger in photon flux having a wavelength from 600 nm to 700 nm than a photon flux having a wavelength from 700 nm to 800 is emitted during a flowering stage from inflorescence formation to flowering.

By thus allowing a plant length to increase over a sufficient period of time during the vegetative growth stage so as to have a long internodal length and causing the plant to speedily blossom during the flowering stage so as to have increased flower weight, cultivation of a long-day plant with improved flower quality becomes possible.

### Citation List

### Patent Literature 1

Japanese Patent Application Publication, Tokukai, No. 2003-158922 A (Publication Date: June 3, 2003)

### Summary of Invention

### Technical Problem

However, according to the invention described in Patent Literature 1, a wavelength of light with which plants in an identical cultivation zone are irradiated is changed during a cultivation period. Patent Literature 1 does not disclose individually controlling elongation growth of a plurality of plant individuals that are being cultivated in an identical cultivation zone. This challenge was newly found by the inventors of the present invention, and no solution to this challenge has been found yet as far as known to the inventors of the present invention.

The present invention was attained to solve the above problems, and an object of the present invention is to provide an illuminating device for plant cultivation, a plant cultivation system, and a plant cultivation method which are capable of individually controlling elongation growth of a plurality of plant individuals that are being cultivated in an identical cultivation zone.

### Solution to Problem

In order to attain the above object, an illuminating device for plant cultivation of an embodiment of the present invention includes a first illuminating section and a second illuminating section each of which emits illumination light for plant cultivation, the illumination light emitted from the first illuminating section and the illumination light emitted from the second illuminating section having different influences on elongation growth of a plant, and the first illuminating section and the second illuminating section irradiating respective different regions in an identical cultivation zone with the illumination light.

A plant cultivation method of an embodiment of the present invention includes the step of irradiating different regions in an identical cultivation zone with two different types of illumination light that have respective different influences on elongation growth of a plant.

According to the arrangement, the first and second illuminating sections emit illumination light for plant cultivation. The illumination light (referred to as first illumination light) emitted from the first illuminating section and the illumination light (referred to as second illumination light) emitted from the second illuminating section have respective different influences on elongation growth of plants. The first illuminating section and the second illuminating section irradiate respective different regions in an identical cultivation zone with the first illumination light and the second illumination light, respectively.

Therefore, elongation growth of a plant that is being cultivated in a specific region of a cultivation zone can be selectively promoted or suppressed so as to be different from that of a plant that is being cultivated in another region of the cultivation zone.

Note that a region irradiated with the first illumination light and a region irradiated with the second illumination light may partially overlap each other, and need not be completely separate regions. Because existence of a region which is irradiated neither with the first illumination light nor with the second illumination light is not preferable from the viewpoint of growth of plants, it is preferable that the region irradiated with the first illumination light and the region irradiated with the second illumination light partially overlap each other.

### Advantageous Effects of Invention

As described above, an illuminating device for plant cultivation of an embodiment of the present invention includes a first illuminating section and a second illuminating section each of which emits illumination light for plant cultivation, the illumination light emitted from the first illuminating section and the illumination light emitted from the second illuminating section having different influences on elongation growth of a plant, and the first illuminating section and the second illuminating section irradiating respective different regions in an identical cultivation zone with the illumination light.

This produces an effect that elongation growth of a plant that is being cultivated in a specific region of a cultivation zone can be selectively promoted or suppressed so as to be different from that of a plant that is being cultivated in another region of the cultivation zone.

### Brief Description of Drawings

Fig. 1 is a view illustrating a configuration of a plant cultivation system of an embodiment of the present invention.
   (a) and (b) of Fig. 2 are views each illustrating an example of a circuit configuration of LEDs included in illuminating sections provided in the plant cultivation system.
Fig. 3 is a view illustrating an example of a spectrum of illumination light emitted from an LED included in the illuminating sections.
Fig. 4 is a view for explaining an effect of the plant cultivation system.
Fig. 5 is a view illustrating a configuration of a plant cultivation system of another embodiment of the present invention.
Fig. 6 is a view illustrating a modification of the illuminating sections.
Fig. 7 is a view illustrating a configuration of a plant cultivation system of still another embodiment of the present invention.
Fig. 8 is a top perspective view illustrating how illuminating sections are disposed in the plant cultivation device.

### Description of Embodiments

### [Embodiment 1]

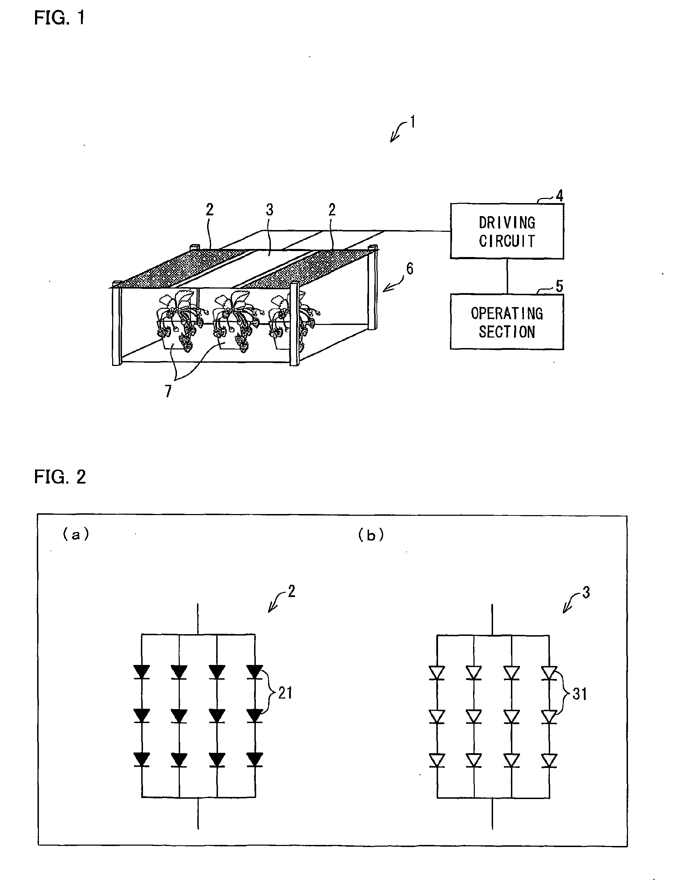

An embodiment of the present invention is described below with reference to Figs. 1 through 3.

Fig. 1 is a view illustrating a configuration of a plant cultivation system 1 of the present embodiment. The plant cultivation system 1 of the present embodiment is, for example, a cultivation system used in a plant factory utilizing artificial light. Cultivation utilizing artificial light means cultivation in which at least part of light for cultivation is artificial light, not cultivation in which solar light is not used at all. The present invention is also applicable to cultivation utilizing solar light and artificial light in combination.

A plant to be cultivated in the plant cultivation system 1 is not limited in particular, and may be a long-day plant or may be a short-day plant. The following discusses strawberry as an example of the plant to be cultivated.

A plant factory, which can artificially control light environment, makes it possible to supply strawberries even in summer by constructing a light environment suitable for flower bud differentiation of strawberries and thereby realizing year-round cultivation of strawberries.

However, a plant factory generally requires a higher cost than open-field cultivation. In order to be successful from a business standpoint, it is extremely important to make a profit by constructing a light environment for highly-efficient cultivation.

From this standpoint, it is significant to properly control growth of strawberries in the plant cultivation system 1. The plant cultivation system 1 individually controls elongation growth of a plurality of plant individuals that are being cultivated in an identical cultivation zone, and as a result, allows a distribution of growth degrees of the plant individuals in the cultivation zone to be in a desired pattern. For example, plant individuals in a cultivation zone may be uniform in growth degree or a plant individual cultivated in a specific region of the cultivation zone may be higher in growth degree.

### (Configuration of Plant Cultivation System 1)

As illustrated in Fig. 1, the plant cultivation system 1 includes an elongation promoting illuminating section (illuminating device for plant cultivation, first illuminating section) 2, a standard illuminating section (illuminating device for plant cultivation, second illuminating section) 3, a driving circuit 4, an operating section 5, and a cultivation shelf 6. Although the plant cultivation system 1 includes other necessary equipment necessary for plant cultivation such as an air conditioner and an air blower, they are not directly related to the features of the present invention, and therefore are not described.

In the plant cultivation system 1, strawberries 7 are cultivated in pots by irradiation of illumination light for plant cultivation emitted from the elongation promoting illuminating section 2 and the standard illuminating section 3.

The strawberries 7 may be collectively fix-planted in a large-size planter. There is no need to individually cultivate the strawberries 7. Moreover, it is possible that the elongation promoting illuminating section 2 and the standard illuminating section 3 be provided on a ceiling of an environment control room and the strawberries 7 be placed on a floor of the environment control room. Use of the cultivation shelf 6 is not necessarily needed.

The driving circuit 4 is a circuit for driving a plurality of LEDs provided in the elongation promoting illuminating section 2 and in the standard illuminating section 3. The driving circuit 4 operates based on conditions set by a user.

The operating section 5 is an input device via which a user's instruction is input. The operating section 5 includes, for example, an operation button, a switch, and the like. By operating the operating section 5, a user controls the elongation promoting illuminating section 2 and the standard illuminating section 3 via the driving circuit 4. Since strawberries are a short-day plant, a day-and-night cycle is set to a short-day condition.

### (Elongation Promoting Illuminating Section 2 and Standard Illuminating Section 3)

The elongation promoting illuminating section 2 is an illuminating device which irradiates end portions of a cultivation zone for the strawberries 7 with illumination light (elongation promoting illumination light) for promoting elongation growth of the strawberries 7.

The standard illuminating section 3 is an illuminating device which irradiates a region (central portion) different from the end portions of the cultivation zone with standard illumination light for cultivation (standard illumination light) suitable for the strawberries 7.

As described above, according to a plant cultivation method in the plant cultivation system 1, two types of illumination light that are different in influence on elongation growth of a plant are applied to different regions of a cultivation zone.

Note, however, that the way in which the elongation promoting illuminating section 2 and the standard illuminating section 3 are disposed is not limited to the one illustrated in Fig. 1. The elongation promoting illuminating section 2 may be disposed along four sides of the standard illuminating section 3 so as to surround the standard illuminating section 3. Alternatively, the elongation promoting illuminating section 2 and the standard illuminating section 3 may form a checkered pattern.

The elongation promoting illuminating section 2 and the standard illuminating section 3 need not be realized as separate illuminating devices. The elongation promoting illuminating section 2 and the standard illuminating section 3 may be realized as a single illuminating device having a part emitting standard illumination light with large R/FR and a part emitting elongation promoting illumination light with small R/FR.

In the plant cultivation system 1, the cultivation zone for the strawberries 7 means a shelf board of the cultivation shelf 6 on which the strawberries 7 are placed. The cultivation zone means, in a broad sense, a zone in which a group of plant bodies which are a target for cultivation at a certain point of time is placed. The cultivation zone need not be partitioned by a wall or the like. Virtually, a range irradiated with illumination light by the elongation promoting illuminating section 2 and the standard illuminating section 3 is a single cultivation zone. From another perspective, the cultivation zone is a zone in which a plurality of plant individuals whose growth is managed as a group are being cultivated. That is, the elongation promoting illuminating section 2 and the standard illuminating section 3 each irradiate a plant individual(s) included in a set of plant individuals (group of plant individuals) with illumination light. At least one of the plant individual(s) irradiated with illumination light emitted from the elongation promoting illuminating section 2 is different from at least one of the plant individual(s) irradiated with illumination light emitted from the standard illuminating section 3.

### (Difference between Elongation Promoting Illumination Light and Standard Illumination Light)

A small ratio (R/FR) of red light (R; light having a peak in a wavelength region of 640 nm to 690 nm) and far-red light (FR; light having a peak in a wavelength region of 700 nm to 800 nm) results in promotion of elongation growth (spindly growth). Conversely, large R/FR results in suppression of elongation growth. R/FR of the elongation promoting illumination light emitted from the elongation promoting illuminating section 2 is smaller than R/FR of the standard illumination light emitted from the standard illuminating section 3. For example, R/FR of the illumination light of the elongation promoting illuminating section 2 is 10, whereas R/FR of the illumination light of the standard illuminating section 3 is 20.

Since R/FR of the elongation promoting illumination light and R/FR of the standard illumination light are different from each other, an influence given by the standard illumination light on elongation growth of a plant and an influence given by the elongation promoting illumination light on elongation growth of a plant are different from each other.

Note that although a larger amount of light with which a plant body is irradiated generally results in greater growth, an increase in growth is not necessarily synonymous with elongation of a stalk. For example, even a plant that has grown to have a thick stalk and large leaves sometimes has a shorter stalk than a case where a smaller amount of light is used. Therefore, for example, in a case where a distance between a light source and a plant is large, it is preferable to more surely control elongation growth by adjusting R/FR so that the plant body grows in a somewhat spindly condition. Growing a plant body in a somewhat spindly condition allows the plant body to be closer to a light source, resulting in promotion of growth.

### (LEDs 21 and LEDs 31)

(a) of Fig. 2 is a view illustrating an example of a circuit configuration of LEDs 21 of the elongation promoting illuminating section 2. (b) of Fig. 2 is a view illustrating an example of a circuit configuration of LEDs 31 of the standard illuminating section 3.

As illustrated in (a) and (b) of Fig. 2, the elongation promoting illuminating section 2 includes a plurality of LEDs 21 emitting the elongation promoting illumination light, and the standard illuminating section 3 includes a plurality of LEDs 31 emitting the standard illumination light.

Each of the LEDs 21 and LEDs 31 is a light source emitting illumination light containing a red light component and a far-red light component, but R/FR in a light emission spectrum of the LEDs 21 is different from that of the LEDs 31.

For example, the illumination light of the LEDs 21 is light having R/FR of 10 which contains red light having a photon flux density of 300 µmol/m²/s and far-red light having a photon flux density of 30 µmol/m²/s. The illumination light of the LEDs 31 is light having R/FR of 20 which contains red light having a photon flux density of 300 µmol/m²/s and far-red light having a photon flux density of 15 µmol/m²/s.

Such a difference in R/FR between the LEDs 21 and the LEDs 31 produces a difference in R/FR between the elongation promoting illuminating section 2 and the standard illuminating section 3. The difference in R/FR between the LEDs 21 and the LEDs 31 is preferably approximately 10% or more. Note, however, that this value can vary depending on the type of a plant, cultivation conditions, etc., and does not limit the present invention.

In general, a photon flux density necessary for cultivation of strawberries is approximately 300 µmol/m²/s in a wavelength region of 400 nm to 700 nm effective for photosynthesis. Light amounts of red light and far-red light may be changed as appropriate as long as this condition is satisfied. From the perspective of maintenance of light amounts necessary for photosynthesis, it is preferable to increase a light amount of far-red light without decreasing a light amount of red light.

Each of the LEDs 21 and the LEDs 31 can be realized by a combination of an LED emitting excitation light of a specific wavelength range and a phosphor. For example, such an arrangement is possible in which a red phosphor is caused to emit light by excitation light emitted by a blue LED, and R/FR is adjusted by changing the type of the red phosphor or by adjusting a blend ratio of plural types of red phosphors.

Alternatively, each of the LEDs 21 and the LEDs 31 may be realized as a single package in which a red LED chip (red light source) and a far-red LED chip (far-red light source) are contained. R/FR of the LEDs 21 and the LEDs 31 may be adjusted by adjusting a balance between a light amount of red light emitted from the red LED chip and a light amount of far-red light emitted from the far-red LED chip.

Alternatively, each of the LEDs 21 and the LEDs 31 may be an LED in which a blue LED chip is packaged in a red phosphor. Light emitted from the blue LED chip via the red phosphor has red and blue spectra and has also a spectrum in a range of far-red light. That is, this LED alone produces effects of three colors. In this case, an R/FR ratio is adjusted by a composition of the red phosphor, power supplied to the LED, addition of a monochromatic LED, etc.

By thus configuring each LED to emit red light and far-red light, it is possible to easily adjust and manage R/FR.

Note that light emitted from the LEDs 21 and the LEDs 31 may contain blue light. For this purpose, each of the LEDs 21 and the LEDs 31 may contain a blue light LED chip. In this case, a total photosynthetic photon flux density of red light and blue light can be, for example, approximately 300 µmol/m²/s. A ratio of red light and blue light can be set as appropriate (e.g. 1:1, 4:1). A photosynthetic photon flux density of far-red light can be set as appropriate according to an emission amount of red light (e.g. when red light is 150 µmol/m²/s, 15 µmol/m²/s in the case of R/FR of 10, 30 µmol/m²/s in the case of R/FR of 5).

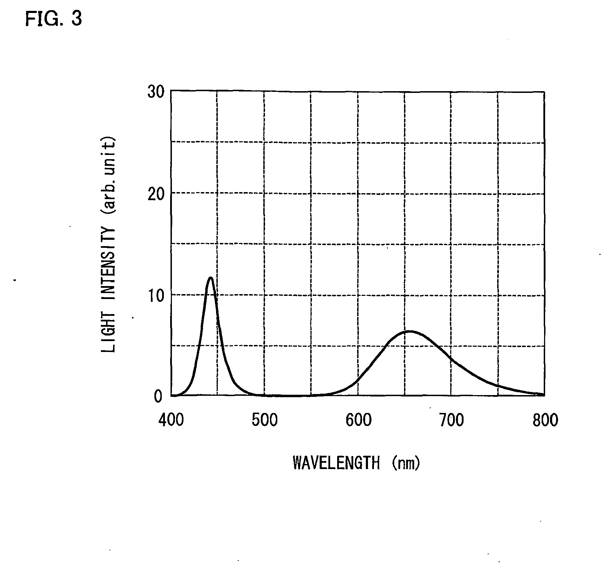

Fig. 3 is a view illustrating an example of a spectrum of illumination light emitted from the LED 21 or the LED 31. In the example illustrated in Fig. 3, the spectrum has a peak of blue in the vicinity of 450 nm and a peak of red in the vicinity of 650 nm, and contains far-red light of wavelength ranging from 700 nm to 780 nm.

### (Circuit Configuration of LEDs)

A circuit configuration of the LEDs 21 and the LEDs 31 is not limited in particular. In the example illustrated in (a) and (b) of Fig. 2, three LEDs are electrically connected in series to constitute an LED sub-block, and four LED sub-blocks are electrically connected in parallel. The LEDs 21 and the LEDs 31 are driven under control of the driving circuit 4.

The driving circuit 4 drives the LEDs 21 and the LEDs 31 under the same electric current/voltage condition. For example, in a case where four LEDs 21 (or the LEDs 31) having Vf of 10 and If of 360 mA are connected in series, and five blocks of the series-connected LEDs 21 (or the LEDs 31) are connected in parallel, the LEDs 21 and the LEDs 31 are driven at 40 V and 1.8 A. In this case, an electric current of 360 mA flows through each of the LEDs 21 and the LEDs 31.

Note that a driving circuit for controlling driving of the LEDs 21 and a driving circuit for controlling driving of the LEDs 31 may be separately provided.

### (Modification of Plant Cultivation System 1)

Such an arrangement is also possible in which (i) the LEDs 21 included in the elongation promoting illuminating section 2 are same in type as the LEDs 31 included in the standard illuminating section 3 and (ii) R/FR of the LEDs 21 is made different from that of the LEDs 31 by driving the LEDs 21 and the LEDs 31 under different driving conditions.

In this case, the driving circuit 4 drives the LEDs 21 and the LEDs 31 under different electric current/voltage conditions. For example, in a case where four LEDs 21 (or the LEDs 31) having Vf of 10 and If of 360 mA are connected in series, and five blocks of the series-connected LEDs 21 (or the LEDs 31) are connected in parallel, the LEDs 21 are driven at 40 V and 1.8 A and the LEDs 31 are driven at 35 V and 0.9 A. In this case, an electric current of 360 mA flows through each of the LEDs 21, whereas an electric current of 180 mA flows through each of the LEDs 31.

Note that since the LEDs are lit based on an electric current value, the above-mentioned voltage is not a strict value. The LEDs 21 and the LEDs 31 may be lit by respective separate power supplies.

Note also that the number of elongation promoting illuminating sections 2 and the number of standard illuminating sections 3 are not limited to those in the example illustrated in Fig. 1, and any number of elongation promoting illuminating sections 2 and any number of standard illuminating sections 3 may be provided. Moreover, R/FR may be changed in stages or continuously in each elongation promoting illuminating section 2.

### (Effect of Plant Cultivation System 1)

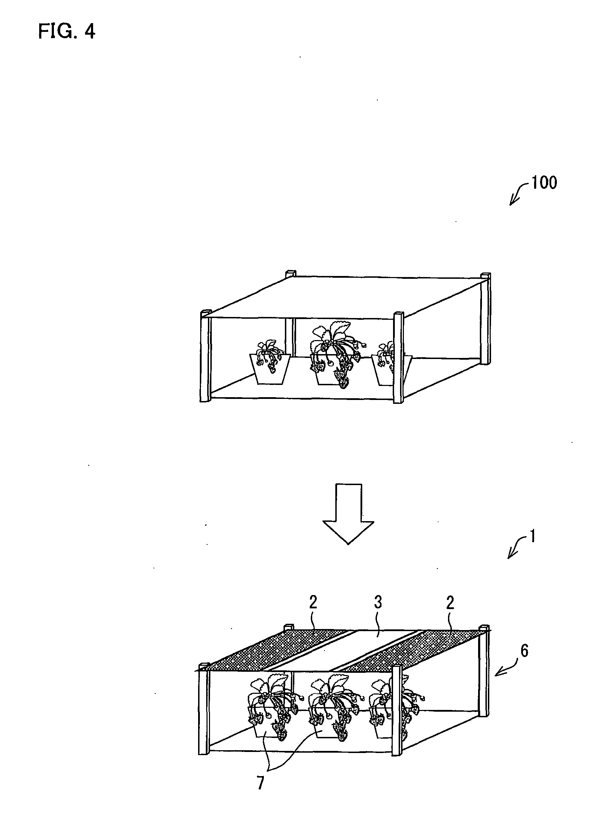

Fig. 4 is a view for explaining an effect of the plant cultivation system 1. In a conventional plant cultivation system 100 illustrated in the upper part of Fig. 4, there is a risk of slowing of growth of plants at end portions of a cultivation zone.

In contrast to this, in the plant cultivation system 1 illustrated in the lower part of Fig. 4, plants placed at end portions of a cultivation zone are irradiated with illumination light promoting elongation growth. This promotes elongation growth of the plants placed at the end portions of the cultivation zone, thereby allowing leaves of the plants to be closer to the elongation promoting illuminating section 2. This promotes photosynthesis of these plants. As a result, it is possible to uniformly grow plants in a cultivation zone.

### [Embodiment 2]

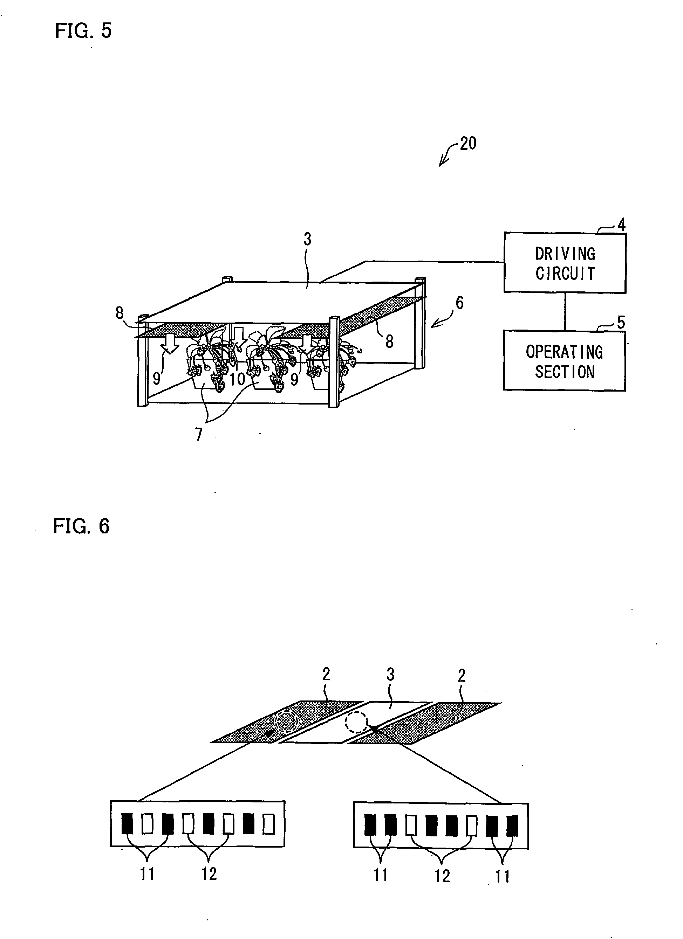

Another embodiment of the present invention is described below with reference to Fig. 5. Note that members similar to those in Embodiment 1 are given identical reference numerals, and are not explained repeatedly.

Fig. 5 is a view illustrating a configuration of a plant cultivation system 20 of the present embodiment. As illustrated in Fig. 5, the plant cultivation system 20 of the present embodiment includes a spectrum transforming sheet (spectrum transforming section) 8 instead of the elongation promoting illuminating section 2. The spectrum transforming sheet 8 is provided at end portions of a cultivation zone below a standard illuminating section 3 (an illumination light emission side of the standard illuminating section 3).

The spectrum transforming sheet 8 converts a spectrum of standard illumination light (indicated by the arrow 10) emitted from the standard illuminating section 3 so as to reduce R/FR of the standard illumination light. The illumination light thus converted (indicated by the arrow 9) has a similar spectrum to elongation promoting illumination light emitted from the elongation promoting illuminating section 2. This means that a combination of the standard illuminating section 3 and the spectrum transforming sheet 8 functions as an illuminating section having a similar function to the elongation promoting illuminating section 2.

The spectrum transforming sheet 8 need not necessarily be provided in parallel with the standard illuminating section 3. The spectrum transforming sheet 8 may be provided so as to cover the strawberries 7. The spectrum transforming sheet 8 can be provided in any way, provided that plants that are being cultivated in an identical cultivation zone are irradiated with different types of illumination light that differ from each other in R/FR.

Unlike the example illustrated in Fig. 5, such an arrangement is also possible in which a spectrum transforming sheet 8 which converts a spectrum of standard illumination light emitted from the standard illuminating section 3 (or the elongation promoting illuminating section 2) so as to increase R/FR of the standard illumination light is provided at a central portion of the standard illuminating section 3 (or the elongation promoting illuminating section 2). Also according to this arrangement, R/FR of the illumination light with which end portions of the cultivation zone becomes relatively small.

The spectrum transforming sheet 8 which increases R/FR can be, for example, Megacool (Registered Trademark) produced by MKV Dream Co., Ltd. or a pink sheet produced by Material Science Nagano.

### [Embodiment 3]

Another embodiment of the present invention is described below with reference to Fig. 6. Note that members similar to those in Embodiments 1 and 2 are given identical reference numerals, and are not explained repeatedly.

Fig. 6 is a view illustrating modifications of the elongation promoting illuminating section 2 and the standard illuminating section 3. As illustrated in Fig. 6, the elongation promoting illuminating section 2 and the standard illuminating section 3 each may have a combination of red LEDs 11 emitting light having a peak in a red wavelength region and far-red LEDs 12 emitting light having a peak in a far-red wavelength region.

In this case, R/FR of the elongation promoting illumination light may be made different from that of the standard illumination light by causing a ratio (disposition pattern) of the red LEDs 11 and the far-red LEDs 12 in the elongation promoting illuminating section 2 to be different from that in the standard illuminating section 3.

Alternatively, R/FR of the elongation promoting illumination light may be made different from that of the standard illumination light by driving the LEDs of the elongation promoting illuminating section 2 and the LEDs of the standard illuminating section 3 under respective different driving conditions.

In Embodiments 1 and 2 above, the standard illuminating section 3 and the elongation promoting illuminating section 2 may have a combination of the red LEDs 11 and the far-red LEDs 12.

In each of these arrangements, a diffusion plate may be provided on an illumination light emission side of the elongation promoting illuminating section 2 and the standard illuminating section 3. This is to prevent occurrence of luminance unevenness, which can occur because LEDs (the red LEDs 11) emitting red light are different from LEDs (the far-red LEDs 12) emitting far-red light.

In the arrangement using the far-red LEDs 12, unlike the example illustrated in Fig. 3, it is possible to emit light having a peak in a far-red region (700 nm to 800 nm). It is therefore possible to increase a spindly growth promoting effect because of the far-red light. In general, spindly growth reaction caused by the far-red light allows leaves to be closer to a light source, thereby increasing an amount of light which the leaves can receive. Furthermore, elongation reaction caused by the far-red light increases leaf areas, thereby increasing areas by which light is received. As a result, a photosynthesis amount increases due to the far-red light. This allows more photosynthetic products such as fruits and leaves to grow, leading to an increase in yield. Furthermore, the inventors of the present invention found that irradiating strawberries with far-red light promotes enlargement etc. of the strawberries and as a result increases yield. This means that irradiating strawberries with far-red light emitted from the far-red LEDs 12 also produces an effect of increasing yield.

### [Embodiment 4]

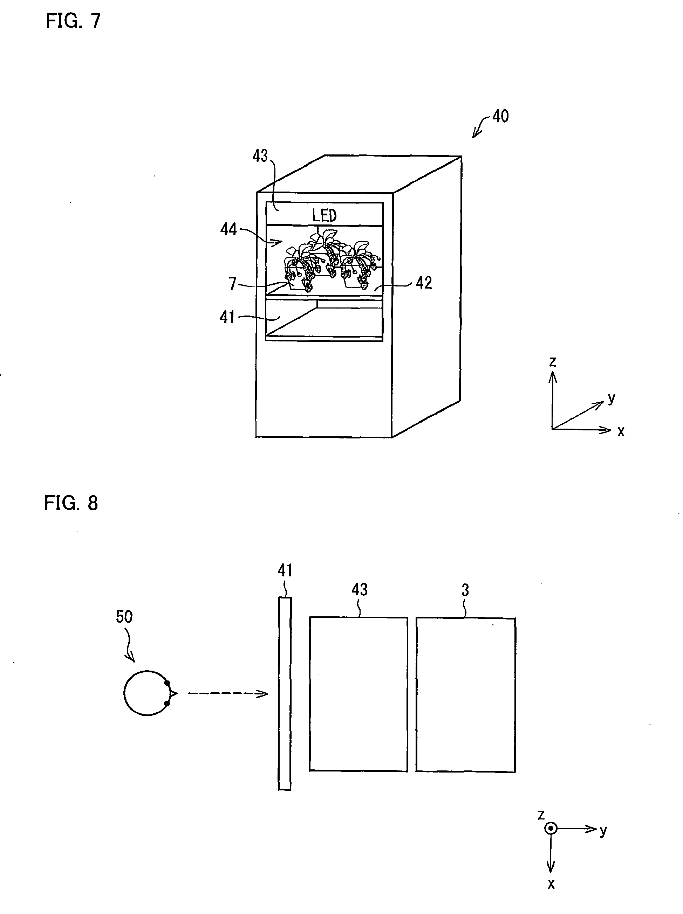

Another embodiment of the present invention is described below with reference to Fig. 7. Note that members similar to those in Embodiments 1 through 3 are given identical reference numerals, and are not explained repeatedly.

Fig. 7 is a view illustrating a configuration of a plant cultivation device (plant cultivation system) 40 of the present embodiment. Fig. 8 is a top perspective view illustrating how illuminating sections are disposed in the plant cultivation device 40. As illustrated in Fig. 7 and Fig. 8, the plant cultivation device 40 is a small plant cultivation device including a glass window (observation window) 41 through which the strawberries 7 can be observed from an outside. Although the plant cultivation device 40 includes other necessary equipment necessary for plant cultivation such as an air conditioner and an air blower, they are not directly related to the features of the present invention, and therefore are not described.

The strawberries 7 are placed on a shelf board 42 provided inside a cultivation space 44, which is air-conditioned. In the present embodiment, "a cultivation zone" is a top surface of the shelf board 42. Alternatively, the cultivation space 44 defined by the plant cultivation device 40 can be regarded as a single cultivation zone.

Above the shelf board 42, a standard illuminating section 3 and an elongation inhibiting illuminating section (first illuminating section) 43 are provided. The elongation inhibiting illuminating section 43 emits elongation inhibiting illumination light which has larger R/FR than standard illumination light emitted from the standard illuminating section 3. Types, circuit configurations, driving methods of LEDs of the standard illuminating section 3 and the elongation inhibiting illuminating section 43, and a method for adjusting R/FR of the illumination light can be similar to those of the embodiments above.

In the plant cultivation device 40, a relative positional relationship between a region irradiated by the elongation inhibiting illuminating section 43 and a region irradiated by the standard illuminating section 3 is determined based on from which direction plants in the cultivation zone are observed. Specifically, as illustrated in Fig. 8, the standard illuminating section 3 is disposed on a side close to the glass window 41, which is an observation window, and the elongation promoting illuminating section 2 is disposed on a side far from the glass window 41. Accordingly, elongation growth of strawberries 7 on the side close to an observer 50 is suppressed as compared with strawberries 7 on the side far from the observer 50.

In a small plant cultivation device for observation use, it is preferable that the strawberries 7 be within the frame of the glass window 41. However, if the strawberries 7 are cultivated without controlling their growth, it is highly likely that leaf stalks of the strawberries 7 will become too long to be within the frame of the glass window 41.

It is possible to suppress elongation growth of the strawberries 7 located on the side close to the glass window 41 by irradiating these strawberries 7 with the elongation inhibiting illumination light, which has larger R/FR than the standard illumination light. This allows the strawberries 7 in the plant cultivation device 40 to look better.

### (Additional Matters)

The present invention can be expressed as follows.

It is preferable that a ratio of red light and far-red light in the illumination light emitted from the first illuminating section is different from that in the illumination light emitted from the second illuminating section.

According to the arrangement, a ratio of red light and far-red light in the first illumination light is different from that in the second illumination light.

A smaller ratio (R/FR) of red light (R) and far-red light (FR) results in promotion of elongation growth. Conversely, larger R/FR results in suppression of elongation growth. Accordingly, a plant irradiated with the first illumination light and a plant irradiated with the second illumination light are different in degree of elongation growth.

Therefore, elongation growth of a plant that is being cultivated in a specific region of a cultivation zone can be selectively promoted or suppressed so as to be different from that of a plant that is being cultivated in another region of the cultivation zone.

The illuminating device may be preferably arranged such that the first illuminating section and the second illuminating section each include a light source for emitting the illumination light containing a red light component and a far-red light component; and the ratio in a light emission spectrum of the light source provided in the first illuminating section is different from that in a light emission spectrum of the light source provided in the second illuminating section.

According to the arrangement, the light source (first light source) provided in the first illuminating section and the light source (second light source) provided in the second illuminating section emit different types of illumination light each of which contains a red light component and a far-red light component and which have different light emission spectra with different R/FR.

Accordingly, just by driving the first light source and the second light source under the same condition, R/FR of the first illumination light can be made different from that of the second illumination light.

The illuminating device may be preferably arranged such that the first illuminating section and the second illuminating section each include a red light source for emitting red light and a far-red light source for emitting far-red light; and the ratio in the illumination light emitted from the first illuminating section is made different from that in the illumination light emitted from the second illuminating section by causing a pattern in which the red light source and the far-red light source are disposed in the first illuminating section to be different from that in the second illuminating section.

According to the arrangement, the first illuminating section and the second illuminating section are different from each other in pattern in which the red light source and the far-red light source are disposed, so that R/FR of the first illumination light is different from that of the second illumination light.

This makes it possible to set or adjust R/FR by a simple design change, i.e., just by changing a pattern in which the red light source and the far-red light source are disposed.

The illuminating device may be arranged such that the first illuminating section and the second illuminating section each include a light source; the light source of the first illuminating section and the light source of the second illuminating section are same in type; and the ratio in the illumination light emitted from the light source provided in the first illuminating section is made different from that in the illumination light emitted from the light source provided in the second illuminating section by driving the light source provided in the first illuminating section and the light source provided in the second illuminating section under respective different driving conditions.

According to the arrangement, the first light source provided in the first illuminating section and the second light source provided in the second illuminating section are of the same type, but R/FR of illumination light emitted from the first light source is made different from that of illumination light emitted from the second light source by driving first light source and the second light source under respective different driving conditions.

It is therefore possible to produce an illuminating device with the use of light sources of the same type. This allows simplification of production processes.

The illuminating device may be arranged such that the first illuminating section includes a light source and a spectrum transforming section which generates the illumination light by converting a spectrum of light emitted from the light source.

According to the arrangement, a spectrum of light emitted from the first light source provided in the first illuminating section is converted by the spectrum transforming section, and light thus converted is used as illumination light.

Accordingly, even in a case where the first light source and the second light source are of the same type, use of the spectrum transforming section allows R/FR of the first illuminating section to be different from that of the second illuminating section. It is therefore possible to simplify a configuration of the illuminating device for plant cultivation.

The illuminating device may be arranged such that the first illuminating section irradiates an end portion of the cultivation zone with the illumination light; and the second illuminating section irradiates a different region of the cultivation zone with the illumination light.

According to the arrangement, the end portion and the other region of the cultivation zone are different in R/FR of illumination light. Because growth of plants in an end portion of a cultivation zone is sometimes delayed as compared with the other region, it is possible to control elongation growth of the plants at the end portion of the cultivation zone by making a difference in R/FR between the end portion and the other region of the cultivation zone. Conversely, it is also possible to control elongation growth of plants at the region other than the end portion of the cultivation zone.

The illuminating device may be arranged such that the cultivation zone is a zone for observation; and a relative positional relationship between a region irradiated with the illumination light by the first illuminating section and a region irradiated with the illumination light by the second illuminating section is determined based on from which direction the plant in the cultivation zone is observed.

According to the arrangement, a relative positional relationship between a region irradiated with the first illumination light and a region irradiated with the second illumination light is determined based on from which direction the plants that are cultivated in the cultivation zone are observed.

This allows elongation growth of plants on the side close to an observer to be different from that of plants on the side far from the observer, thereby allowing the plants to look better.

The illuminating device may be arranged such that the light source is a package in which a light source for emitting red light and a light source for emitting far-red light are contained.

The illuminating device may be arranged such that the light source includes a light source for emitting red light and a light source for emitting far-red light that are individually packaged.

The illuminating device may be arranged such that the light source includes a light-emitting diode.

According to the arrangement, use of a light-emitting diode as a light source makes it possible to provide an illuminating device with a longer lifetime and less energy consumption.

A plant cultivation system including the illuminating device for plant cultivation is encompassed within the technical scope of the present invention.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention is applicable as a plant cultivation device and a plant cultivation system in which growth of a plant is preferably controlled, and as an illuminating device provided in the plant cultivation device and the plant cultivation system.

### Reference Signs List

1: Plant cultivation system
2: Elongation promoting illuminating section (first illuminating section)
3: Standard illuminating section (second illuminating section)
7: Strawberry
8: Spectrum transforming sheet (spectrum transforming section)
20: Plant cultivation system
21: LED (light source)
31: LED (light source)
40: Plant cultivation device
43: Elongation inhibiting illuminating section (first illuminating section)

## Claims

1. An illuminating device for plant cultivation, comprising:
a first illuminating section and a second illuminating section each of which emits illumination light for plant cultivation,
the illumination light emitted from the first illuminating section and the illumination light emitted from the second illuminating section having different influences on elongation growth of a plant, and
the first illuminating section and the second illuminating section irradiating respective different regions in an identical cultivation zone with the illumination light.

2. The illuminating device according to claim 1, wherein a ratio of red light and far-red light in the illumination light emitted from the first illuminating section is different from that in the illumination light emitted from the second illuminating section.

3. The illuminating device according to claim 2, wherein:
the first illuminating section and the second illuminating section each include a light source for emitting the illumination light containing a red light component and a far-red light component; and
the ratio in a light emission spectrum of the light source provided in the first illuminating section is different from that in a light emission spectrum of the light source provided in the second illuminating section.

4. The illuminating device according to claim 2, wherein:
the first illuminating section and the second illuminating section each include a red light source for emitting red light and a far-red light source for emitting far-red light; and
the ratio in the illumination light emitted from the first illuminating section is made different from that in the illumination light emitted from the second illuminating section by causing a pattern in which the red light source and the far-red light source are disposed in the first illuminating section to be different from that in the second illuminating section.

5. The illuminating device according to claim 2, wherein:
the first illuminating section and the second illuminating section each include a light source;
the light source of the first illuminating section and the light source of the second illuminating section are same in type; and
the ratio in the illumination light emitted from the light source provided in the first illuminating section is made different from that in the illumination light emitted from the light source provided in the second illuminating section by driving the light source provided in the first illuminating section and the light source provided in the second illuminating section under respective different driving conditions.

6. The illuminating device according to claim 1, wherein the first illuminating section includes a light source and a spectrum transforming section which generates the illumination light by converting a spectrum of light emitted from the light source.

7. The illuminating device according to any one of claims 1 through 6, wherein:
the first illuminating section irradiates an end portion of the cultivation zone with the illumination light; and
the second illuminating section irradiates a different region of the cultivation zone with the illumination light.

8. The illuminating device according to any one of claims 1 through 6, wherein:
the cultivation zone is a zone for observation; and
a relative positional relationship between a region irradiated with the illumination light by the first illuminating section and a region irradiated with the illumination light by the second illuminating section is determined based on from which direction the plant in the cultivation zone is observed.

9. The illuminating device according to claim 3, wherein the light source is a package in which a light source for emitting red light and a light source for emitting far-red light are contained.

10. The illuminating device according to claim 3, wherein the light source includes a light source for emitting red light and a light source for emitting far-red light that are individually packaged.

11. The illuminating device according to any one of claims 3, 9, and 10, wherein the light source includes a light-emitting diode.

12. A plant cultivation system comprising an illuminating device as set forth in any one of claims 1 through 11.

13. A plant cultivation method, comprising the step of irradiating different regions in an identical cultivation zone with two different types of illumination light that have respective different influences on elongation growth of a plant.
